# EUROPÄISCHE PATENTSCHRIFT

(11) **EP 1 621 078 B1**
(45) Veröffentlichungstag und Bekanntmachung des Hinweises auf die Patenterteilung: **22.08.2007**
(21) Anmeldenummer: 04018181.0
(22) Anmeldetag: 30.07.2004
(51) Int. Cl.: A21C 7/04

(54) **Wirkmaschine für Teigstücke**
Device for shaping dough portions
Dispositif de mise en forme des portions de pâte

(43) Veröffentlichungstag der Anmeldung: 01.02.2006
(73) Patentinhaber: RL Patentverwertung GmbH, 64291 Pfungstadt (DE)
(72) Erfinder: Lippelt, Renate, 64319 Pfungstadt (DE)
(74) Vertreter: Katscher, Helmut

(56) Entgegenhaltungen:
- EP-A- 1 306 009
- CH-A- 125 198
- CH-A- 377 754
- DE-A1- 10 304 298
- DE-B- 1 053 437
- DE-B- 1 216 214
- DE-B- 1 236 433
- US-A- 1 881 364
- US-A- 2 047 430
- US-A- 2 781 732
- US-A- 3 459 140
- US-A- 4 511 318
- US-A- 4 793 789

## Beschreibung

Die Erfindung betrifft eine Wirkmaschine für Teigstücke mit einer das zu wirkende Teigstück aufnehmenden Wirkkammer, die von einer umlaufenden Wirkkammerwand, einer Wirkkammerdecke und einem Wirkkammerboden umschlossen ist, wobei die Wirkkammerwand und der Wirkkammerboden relativ zueinander zu einer kreisförmigen Wirkbewegung um die Mittelachse der Wirkkammer antreibbar sind.

Derartige Wirkmaschinen dienen dazu, ausgeschnittene Teigstücke durch eine Wirkbewegung in die für den nachfolgenden Backvorgang geeignete Form zu bringen. Dabei wird die die Oberseite des Teigstücks bildende Haut allseitig nach unten gestrafft und an der Unterseite wird ein sog. Schluss des Teigstücks erreicht.

Allen bekannten Wirkmaschinen ist gemeinsam, dass die Wirkkammerwand der das Teigstück aufnehmenden Wirkkammer relativ zu dem Wirkkammerboden eine Orbitalbewegung ausführt. In vielen Fällen ist der Wirkkammerboden aufgeraut oder mit einer Vertiefung versehen, um eine kraftschlüssige Verbindung mit dem zu wirkenden Teigstück herzustellen. Nach Abschluss des Wirkvorgangs wird die Wirkkammer geöffnet und das rundgewirkte Teigstück entnommen.

Gemäß einer ersten, üblichen Bauform von Wirkmaschinen werden die Wirkkammerböden durch eine im wesentlichen ebene Bodenscheibe gebildet. Zwischen dieser Bodenscheibe und mehreren anhebbaren Wirkkammern erfolgt eine kreisende Relativbewegung. Nach dem Anheben der Wirkkammerwände werden die Teigstücke eingelegt. Nach Abschluss des Wirkvorgangs werden die Wirkkammerwände angehoben, damit das gewirkte Teigstück entnommen werden kann.

Gemäß einer zweiten üblichen Ausführungsform von Wirkmaschinen sind mehrere Wirkkammern als Durchbrechungen einer hohlzylindrischen Außentrommel gebildet, die eine Innentrommel umgibt. Die Außenfläche der Innentrommel bildet die Wirkkammerböden der Wirkkammern. Die Innentrommel und die Außentrommel werden zu einer Drehung um ihre gemeinsame Trommelachse angetrieben.

Die Wirkkammerwände der unterschiedlichen Wirkmaschinen können zylindrisch oder prismatisch, beispielsweise mit einem Sechseckgrundriss, ausgeführt sein. Die für den Wirkvorgang wesentliche Straffung der Oberseite des Teigstücks wird nur dadurch erreicht, dass die Wirkkammerwand nacheinander von allen Seiten auf das Teigstück seitlich drückt, während das Teigstück am Wirkkammerboden mehr oder minder gehalten wird.

Für das Wirkergebnis ist einerseits der erforderliche Zeitaufwand und andererseits die erzielte Straffung der oberen Haut des Teigstücks wesentlich.

Bei einer bekannten Wirkmaschine für Teigstücke der eingangs genannten Gattung (US-A-2 781 732) weist die Wirkkammer eine im Wesentlichen hohlzylindrische Wirkkammerwand auf, deren Innenfläche im unteren Bereich von einem Gewinde gebildet wird. Die Wirkkammerdecke wird von einem fest angeordneten Deckel gebildet, der beim Wirkvorgang nicht auf dem Teigstück aufliegt und der mehrere Öffnungen aufweist, durch die Mehl oder ähnliches Material in die Wirkkammer gestreut wird. Die mehreren Windungen des Gewindes im unteren Bereich der Wirkkammerwand werden durch Gewinderillen gebildet, die aus der zylindrischen Innenwand ausgespart sind.

Weiterhin ist in EP-1 306 009 ein Wirkmaschine für Teigstücke der eingangs genannten Gattung offenbart wobei die Wirkkammerdecke durch einen frei höhenbeweglichen Kammerdeckel gebildet wird.

Aufgabe der Erfindung ist es daher, eine Wirkmaschine der eingangs genannten Art so auszubilden, dass mit geringerem Zeitaufwand ein besseres Wirkergebnis erzielt wird. Diese Aufgabe wird erfindungsgemäß dadurch gelöst, dass vom inneren Umfang der Wirkkammerwand ein Bewirkungsring in die Wirkkammer vorspringt und dass der Bewirkungsring im Abstand zum Wirkkammerboden angeordnet ist.

Der Bewirkungsring übt im unteren Bereich der Wirkkammer einen verstärkten seitlichen Krafteinfluss auf das Teigstück aus, wodurch eine erhöhte Energieeinleitung im unteren Bereich des Teigstücks erfolgt. Die Seiten des Teigstücks werden an dieser Stelle zum Zentrum des Teigstücks hin verschoben, und zwar umlaufend um das gesamte Teigstück. Dadurch wird das Teigstück intensiver verarbeitet. Die Wirkbewegungen können gegenüber herkömmlichen Teigwirkmaschinen, die mit senkrechten Wirkkammerwänden arbeiten, wesentlich herabgesetzt werden, beispielsweise auf ca. 50 %.

Durch die Verwendung der Bewirkungsringe in den Wirkkammern wird die Arbeitsweise schonender. Insbesondere erfolgt durch das Einschieben der Teigstückoberfläche nach innen eine wirksame und gleichmäßige Spannung der Oberhaut. Der so aus dem Teigstück gewirkte Teigling steht beim Verlassen der Wirkmaschine deutlich aufrechter.

Zugleich wird auch der Schluss an der Unterseite des Teigstücks verbessert. Beispielsweise ist bei der Herstellung von sog. Berlinern, einem Fettgebäck aus Hefeteig, ein exaktes Schließen und Zuschieben des Schlusses auf der Unterseite sehr wichtig, damit diese Gebäcke bei der nachfolgenden Produktion im Fettbackgerät infolge eines nicht perfekt geschlossenen Schlusses nicht zu viel Fett aufsaugen.

Durch den Abstand des Bewirkungsrings wird ein Straffen der Oberhaut erreicht.

Vorzugsweise ist der innere Rand des Bewirkungsrings im Querschnitt abgerundet, um eine Beschädigung der Außenfläche des Teigstücks, insbesondere der zu spannenden Oberhaut, zu vermeiden.

Gemäß einer bevorzugten Ausführungsform der Erfindung kann vorgesehen werden, dass der Bewirkungsring in seinem Abstand zum Wirkkammerboden verstellbar ist. Dadurch wird die Möglichkeit zur Anpassung an unterschiedliche Anforderungen gegeben. Insbesondere lässt sich dadurch der an der Unterseite des Teigstücks erfolgende Schluss in der je nach der Gebäckart unterschiedlichen Weise gestalten.

Während beispielsweise bei Berlinern ein vollständiges Schließen an der Unterseite erwünscht ist, soll bei Rosenbrötchen der Schluss nur so weit erfolgen, dass an der Unterseite noch eine Fettportion eingebracht werden kann.

Weitere vorteilhafte Ausgestaltungen des Erfindungsgedankens sind Gegenstand weiterer Unteransprüche.

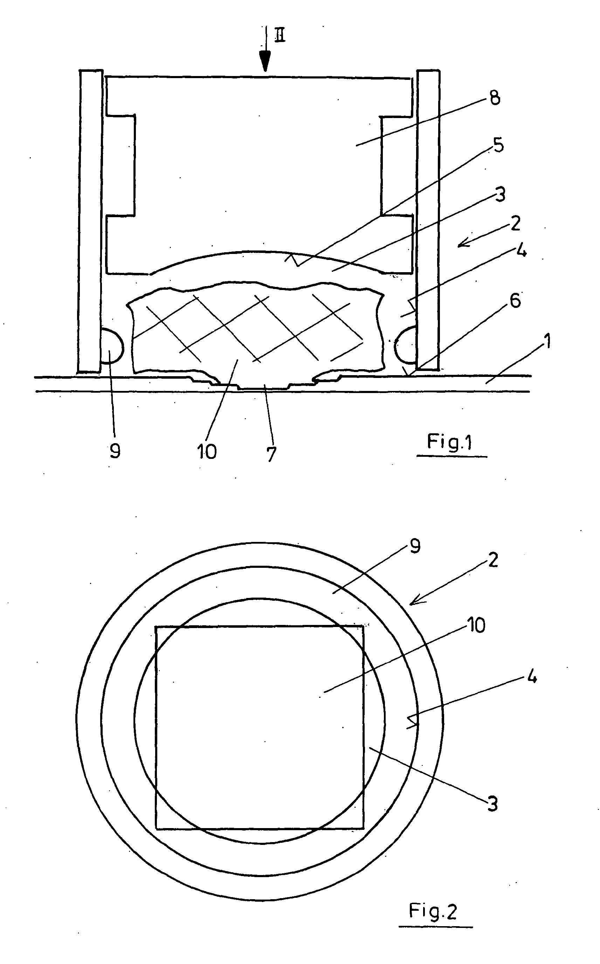

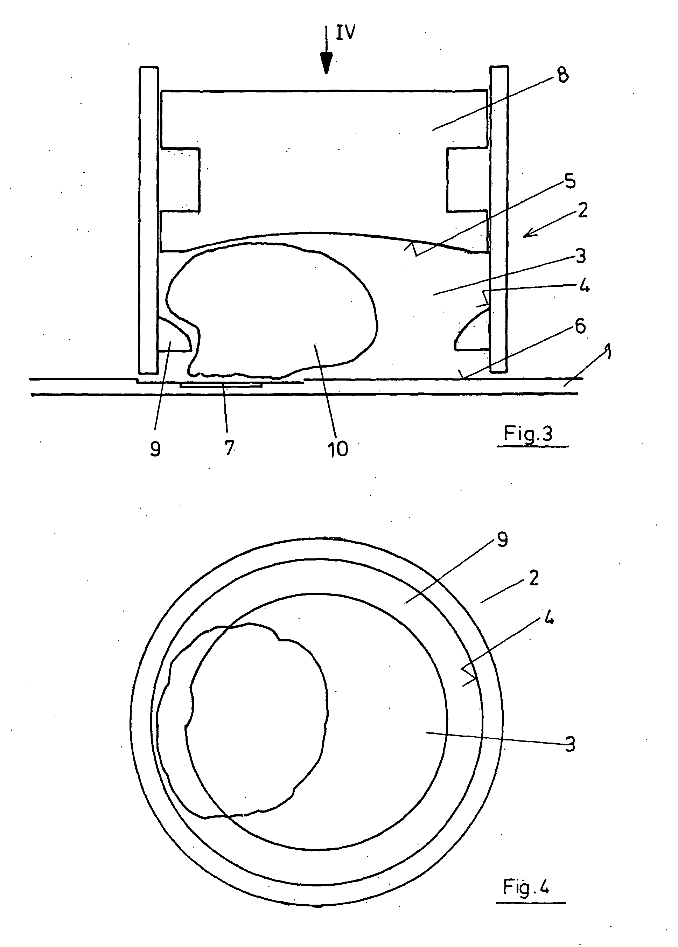

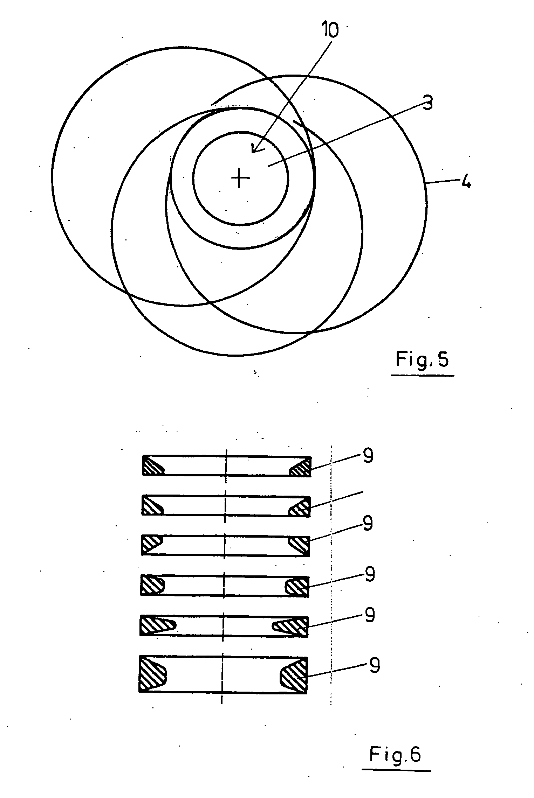

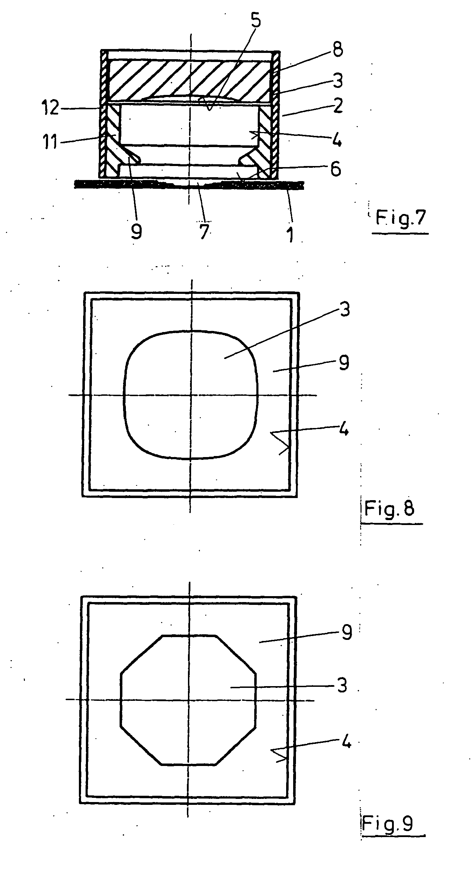

Die Erfindung wird nachfolgend an Ausführungsbeispielen näher erläutert, die in der Zeichnung dargestellt sind. Es zeigt.:
Fig. 1 eine Wirkkammer einer Wirkmaschine im senkrechten Schnitt mit eingelegtem Teilstück,
Fig. 2 eine Draufsicht in Richtung des Pfeiles II in Fig. 1 bei geöffnetem Wirkkammerdeckel,
Fig. 3 die Wirkkammer nach Fig. 1 während des Wirkvorgangs,
Fig. 4 eine Draufsicht entsprechend der Fig. 2 in Richtung des Pfeiles IV in Fig. 3,
Fig. 5 in schematischer Darstellungsweise die Relativbewegung der Wirkkammerwand gegenüber dem Teigstück,
Fig. 6 im Schnitt unterschiedliche Querschnittsgestaltungen des Bewirkungsrings,
Fig. 7 eine gegenüber der Fig. 1 abgewandelte Ausführungsform einer Wirkkammer,
Fig. 8 und 9 in Draufsichten ähnlich der Fig. 2 abgewandelte Ausführungsformen der Wirkkammern und der Bewirkungsringe und
Fig. 10 in schematischer Darstellungsweise eine Trommelwirkmaschine mit Bewirkungsringen.
   Eine Wirkmaschine zum Wirken von Teigstücken weist über einer im wesentlichen ebenen Bodenscheibe 1 mehrere Wirkeinheiten 2 auf, von denen in Fig. 1 nur eine dargestellt ist. In jeder Wirkeinheit 2 ist eine Wirkkammer 3 von einer Wirkkammerwand 4, einer Wirkkammerdecke 5 und einem von der Bodenscheibe 1 gebildeten Wirkkammerboden 6 umschlossen. Der Wirkkammerboden 6 kann eine abgestufte Vertiefung 7 aufweisen.
   Die Wirkkammerdecke 5 wird von einem Wirkkammerdeckel 8 gebildet, der höhenbeweglich an der hier beispielsweise zylindrisch ausgeführten Wirkkammerwand 4 geführt ist. Die Wirkkammerdecke 5 ist konkav gewölbt.
   Im unteren Bereich der Wirkkammer 3 springt vom inneren Umfang der Wirkkammerwand 4 ein Bewirkungsring 9 allseitig in die Wirkkammer 3 vor. Der Bewirkungsring 9 ist im Abstand zum Wirkkammerboden 6 angeordnet. Sein innerer Rand ist im Querschnitt abgerundet. Die Oberseite des Bewirkungsrings 9 fällt zu seinem inneren Rand hin ab. Der Bewirkungsring 9 hat, wie in Fig. 2 und 4 erkennbar, eine im Grundriss kreisförmige Innenkontur. Der Abstand des Bewirkungsrings 9 zum Wirkkammerboden 6 ist in allen Betriebszuständen geringer als der Abstand zur Wirkkammerdecke 5.
   Der die Wirkkammerwand 4 bildende Ring wird zunächst von der Bodenscheibe 1 angehoben; ein beispielsweise quadratisch ausgeschnittenes Teigstück 10 wird in die Wirkkammer 3 eingelegt und die Wirkkammerwand 4 wird bis auf einen kleinen verbleibenden Spalt auf die Bodenscheibe 1 abgesenkt. Wie man aus Fig. 2 erkennt, kann der Wirkring 9 dabei auf die Ecke des abgeschnittenen Teigstücks 10 drücken.
   Sodann beginnt eine kreisende Relativbewegung zwischen der Bodenscheibe 1 und der Wirkeinheit 2. Mit Beginn dieser Orbital-Rotationsbewegung, die in Fig. 5 schematisch dargestellt ist, werden zunächst die Ecken des Teigstücks 10 nach innen geschoben. Die Vertiefung 7 im Wirkkammerboden 6 dient dazu, das Teigstück 10 während des Wirkvorgangs weitgehend am Wirkkammerboden 6 festzulegen.
   Beim Absenken der Wirkkammerwand 4 senkt sich auch der Kammerdeckel 8 ab; die Wirkkammerdecke 5 drückt dabei auf die Oberseite des Teigstücks 10.
   Bei der kreisenden Wirkbewegung wird das Teigstück 10 nicht nur durch den ständigen Kontakt der Wirkkammerwand 4 mit dem Teigstück 10, sondern insbesondere durch den Bewirkungsring 9 nach innen gewirkt. Der größte Teil der Energie wird hierbei auf den unteren Bereich des Teigstücks 10 aufgebracht, wobei eine intensive Bearbeitung unter gleichzeitiger Spannung der Oberhaut erfolgt. Gleichzeitig wird der Schluss an der Unterseite des Teigstücks 10 hergestellt.
   Dieser Wirkvorgang ist in den Fig. 3 und 4 dargestellt.
   Um eine Einstellung auf unterschiedliche Anforderungen bei der Vorbereitung unterschiedlicher Gebäckstücke zu ermöglichen, kann der Bewirkungsring 9 in seinem Abstand zum Wirkkammerboden 6 verstellbar ausgeführt sein. Beispielsweise kann er höhenverstellbar an der Wirkkammerwand 4 angebracht sein.
   Fig. 6 zeigt unterschiedliche Querschnittsgestaltungen des Bewirkungsrings 9. Auch durch die Auswahl dieser Querschnittsgestaltungen kann der Wirkvorgang beeinflusst und an die Anforderungen des jeweiligen Einzelfalls angepasst werden.
   Abweichen zu der in den Fig. 1-4 dargestellten Ausführungsform, bei der der Bewirkungsring 9 durch einen an der Wirkkammerwand 4 angebrachten Ring gebildet wird, kann gemäß Fig. 7 auch vorgesehen sein, dass der Bewirkungsring 9 an der Innenseite einer die Wirkkammer 3 umgebenden Wirkkammerhülse 11 ausgebildet ist, die auswechselbar in einem Zylinderrohr 12 angeordnet ist.
   Auch hierbei wird die Wirkkammerdecke 5 durch einen frei höhenbeweglichen Wirkkammerdeckel 8 gebildet. Der Kammerdeckel 8 weist in seiner der Wirkkammer 3 zugekehrten Deckelunterseite eine zentrale abgerundete Vertiefung auf.
   Abweichend von der bisher dargestellten und beschriebenen runden Ausführungsform der Wirkkammer 3 und des Bewirkungsrings 9 ist in Fig. 8 gezeigt, dass der Bewirkungsring 9 auch eine unrunde Innenkontur aufweisen kann, beispielsweise eine zumindest angenähert quadratische Innenkontur mit abgerundeten Innenecken, wobei hier der Grundriss der Wirkkammerwand 4 beispielsweise quadratisch ist, an den sich die Innenkontur des Bewirkungsrings 9 anpasst.

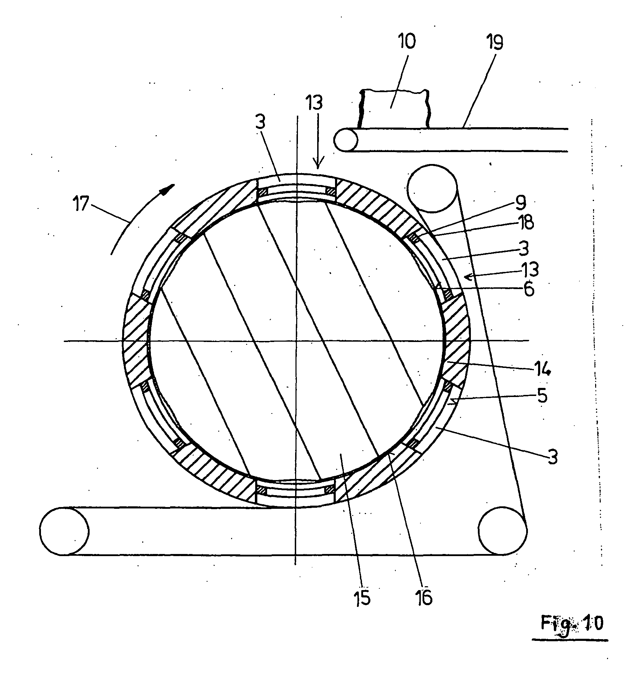

   In Fig. 9 ist gezeigt, dass bei ebenfalls quadratischer Grundrissgestaltung der Wirkkammerwand 4 der Bewirkungsring 9 beispielsweise eine zumindest angenähert sechseckige Innenkontur aufweisen kann.
   Während bei den bisher beschriebenen Ausführungsformen der Wirkkammerboden 6 durch eine im wesentlichen ebene Bodenscheibe 1 gebildet wird und die Wirkkammerwand 4 mit dem Bewirkungsring 9 und dem Kammerdeckel 8 zur Aufnahme und Freigabe des Teigstücks 10 von der Bodenscheibe 1 anhebbar ist, ist in Fig. 10 eine grundsätzlich andere Ausführungsform einer Wirkmaschine schematisch in einem senkrechten Schnitt gezeigt. Mehrere Wirkkammern 3 werden jeweils von Durchbrechungen 13 einer hohlzylindrischen Außentrommel 14 gebildet, die eine Innentrommel 15 umgibt. Die Außenfläche 16 der Innentrommel 15 bildet die Wirkkammerböden 6 der Wirkkammern 3, die auch hier mit einer Vertiefung zum besseren Kraftschluss mit dem aufzunehmenden Teigstück 10 versehen sein können. Die Innentrommel 15 und die Außentrommel 14 sind zu einer Drehung um ihre gemeinsame Trommelachse in Richtung des Pfeiles 17 antreibbar.
   Dieser gemeinsamen Drehbewegung ist eine Relativbewegung zwischen der Außentrommel 14 und der Innentrommel 15 in der Weise überlagert, dass die Außentrommel 14 und die Innentrommel 15 relativ zueinander zu kreisförmigen Wirkbewegungen um die Mittelachsen aller Wirkkammern 3 antreibbar sind.
   Ein die Außentrommel 14 in einem Bereich ihres Umfangs umgebendes, mitlaufendes Deckband 18 bildet die Wirkkammerdecken 5 der Wirkkammern 3 in diesem Bereich. In jeder Durchbrechung 13 der Außentrommel 14 ist ein in die Wirkkammer 3 vorspringender umlaufender Bewirkungsring 9 angeordnet.
   Die zu wirkenden Teigstücke 10 werden von einem Zuführband 19 jeweils in die nach oben offenen Wirkkammern 3 in der obersten Stellung der Außentrommel 14 eingeworden. Während bei herkömmlichen Wirkmaschinen der Durchmesser der Wirkkammern verhältnismäßig klein gewählt werden muss, damit die Wirkkammerwände einen Wirkvorgang ausführen können, wobei dann auch die zur Verfügung stehende Einwurföffnung verhältnismäßig klein ist, kann der Durchmesser der Wirkkammern 3 bei der dargestellten Wirkmaschine verhältnismäßig größer gewählt werden, so dass auch das Einwerfen der Teigstücke 10 erleichtert wird. Da der Innendurchmesser der Bewirkungsringe 9 aber entsprechend kleiner ist, ist trotzdem ein optimaler Wirkvorgang sichergestellt.

## Patentansprüche

1. Wirkmaschine für Teigstücke mit einer das zu wirkende Teigstück aufnehmenden Wirkkammer (3), die von einer umlaufenden Wirkkammerwand (4), einer Wirkkammerdecke (5) und einem Wirkkammerboden (6) umschlossen ist, wobei die Wirkkammerwand (4) und der Wirkkammerboden (6) relativ zueinander zu einer kreisförmigen Wirkbewegung um die Mittelachse der Wirkkammer (3) antreibbar sind und die Wirkkammerdecke (5) durch einen frei höhenbeweglichen Kammerdeckel (8) gebildet wird, **dadurch gekennzeichnet, dass** vom inneren Umfang der Wirkkammerwand (4) ein Bewirkungsring (9) in die Wirkkammer (3) vorspringt und im Abstand zum Wirkkammerboden (6) angeordnet ist.

2. Wirkmaschine nach Anspruch 1, **dadurch gekennzeichnet, dass** der innere Rand des Bewirkungsrings (9) im Querschnitt abgerundet ist.

3. Wirkmaschine nach Anspruch 1, **dadurch gekennzeichnet, dass** der Abstand des Bewirkungsring (9) zum Wirkkammerboden (6) geringer ist als der Abstand zur Wirkkammerdecke (5).

4. Wirkmaschine nach Anspruch 1, **dadurch gekennzeichnet, dass** der Bewirkungsring (9) in seinem Abstand zum Wirkkammerboden (6) verstellbar ist.

5. Wirkmaschine nach Anspruch 1, **dadurch gekennzeichnet, dass** die Oberseite des Bewirkungsring (9) zu seinem inneren Rand hin abfällt.

6. Wirkmaschine nach Anspruch 1, **dadurch gekennzeichnet, dass** der Bewirkungsring (9) eine im Grundriss kreisförmige Innenkontur aufweist.

7. Wirkmaschine nach Anspruch 1, **dadurch gekennzeichnet, dass** der Bewirkungsring (9) eine im Grundriss unrunde Innenkontur aufweist.

8. Wirkmaschine nach Anspruch 7, **dadurch gekennzeichnet, dass**.der Bewirkungsring (9) eine im Grundriss zumindest angenähert quadratische Innenkontur mit abgerundeten Innenecken aufweist.

9. Wirkmaschine nach Anspruch 7, **dadurch gekennzeichnet, dass** der Bewirkungsring (9) eine im Grundriss zumindest angenähert sechseckige Innenkontur aufweist.

10. Wirkmaschine nach Anspruch 8 oder 9, **dadurch gekennzeichnet, dass** die Wirkkammerwand (4) im Grundriss zumindest angenähert quadratisch ist.

11. Wirkmaschine nach Anspruch 1, **dadurch gekennzeichnet, dass** der Bewirkungsring (9) durch einen an der Wirkkammerwand (4) angebrachten Ring gebildet wird.

12. Wirkmaschine nach Anspruch 1, **dadurch gekennzeichnet, dass** der Bewirkungsring an der Innenseite einer die Wirkkammer (3) umgebenden Wirkkammerhülse (11) ausgebildet ist, die auswechselbar in einem Zylinder (12) angeordnet ist.

13. Wirkmaschine nach Anspruch 1, **dadurch gekennzeichnet, dass** der Kammerdeckel (8) in seiner der Wirkkammer (3) zugekehrten Deckelunterseite eine zentrale abgerundete Vertiefung aufweist.

14. Wirkmaschine nach Anspruch 1, **dadurch gekennzeichnet, dass** der Wirkkammerboden (6) durch eine im wesentlichen ebene Bodenscheibe (1) gebildet wird und dass die Wirkkammerwand (4) mit dem Bewirkungsring (9) und dem Kammerdeckel (8) zur Aufnahme und Freigabe des Teigstücks (10) von der Bodenscheibe (1) anhebbar ist.

15. Wirkmaschine nach Anspruch 1, **dadurch gekennzeichnet, dass** mehrere Wirkkammern (3) von Durchbrechungen (13) einer hohlzylindrischen Außentrommel (14) gebildet werden, die eine Innentrommel (15) umgibt, deren Außenfläche (16) die Wirkkammerböden (6) der Wirkkammer (3) bildet, dass die Innentrommel (15) und die Außentrommel (14) zu einer Drehung um ihre gemeinsame Trommelachse antreibbar sind, dass die Außentrommel (14) und die Innentrommel (15) relativ zueinander zu kreisförmigen Wirkbewegungen um die Mittelachsen aller Wirkkammern (3) antreibbar sind, dass ein die Außentrommel (14) in einem Bereich ihres Umfangs umgebendes, mitlaufendes Deckband (18) die Wirkkammerdecken (5) der Wirkkammern (3) in diesem Bereich bildet und dass in jeder Durchbrechung (13) der Außentrommel (14) ein in die Wirkkammer (3) vorspringender Bewirkungsring (9) angeordnet ist.

## Claims

1. Machine for working pieces of dough, having a working chamber (3) which accommodates the piece of dough to be worked and is enclosed by an encircling working-chamber wall (4), a working-chamber top (5) and a working-chamber base (6), it being possible for the working-chamber wall (4) and the working-chamber base (6) to be driven relative to one another to execute a circular working movement about the centre axis of the working chamber (3), and the working-chamber top (5) being formed by a freely vertically moveable chamber cover (8), **characterized in that** a working ring (9) projects into the working chamber (3) from the inner circumference of the working-chamber wall (4) and is spaced apart from the working-chamber base (6).

2. Working machine according to Claim 1, **characterized in that** the inner periphery of the working ring (9) is rounded in cross section.

3. Working machine according to Claim 1, **characterized in that** the spacing between the working ring (9) and the working-chamber base (6) is smaller than the spacing between the ring and the working-chamber top (5).

4. Working machine according to Claim 1, **characterized in that** the spacing of the working ring (9) from the working-chamber base (6) can be adjusted.

5. Working machine according to Claim 1, **characterized in that** the top side of the working ring (9) slopes down in the direction of its inner periphery.

6. Working machine according to Claim 1, **characterized in that** the working ring (9) has an inner contour which is circular in plan view.

7. Working machine according to Claim 1, **characterized in that** the working ring (9) has an inner contour which is non-round in plan view.

8. Working machine according to Claim 7, **characterized in that** the working ring (9) has an inner contour which is at least more or less square in plan view and has rounded inner corners.

9. Working machine according to Claim 7, **characterized in that** the working ring (9) has an inner contour which is at least more or less hexagonal in plan view.

10. Working machine according to Claim 8 or 9, **characterized in that** the working-chamber wall (4) is at least more or less square in plan view.

11. Working machine according to Claim 1, **characterized in that** the working ring (9) is formed by a ring fitted on the working-chamber wall (4).

12. Working machine according to Claim 1, **characterized in that** the working ring is formed on the inside of a working-chamber sleeve (11) which encloses the working chamber (3) and is arranged in an exchangeable manner in a cylinder (12).

13. Working machine according to Claim 1, **characterized in that** the chamber cover (8) has a centrally rounded depression in its underside, which is directed towards the working chamber (3).

14. Working machine according to Claim 1, **characterized in that** the working-chamber base (6) is formed by an essentially planar base panel (1), and **in that** the working-chamber wall (4), with the working ring (9) and the chamber cover (8), can be raised from the base panel (1) in order to accommodate and release the piece of dough (10).

15. Working machine according to Claim 1, **characterized in that** a plurality of working chambers (3) are formed by through-passages (13) in a hollow-cylindrical outer drum (14) which encloses an inner drum (15), of which the outer surface (16) forms the bases (6) of the working chamber (3), **in that** the inner drum (15) and the outer drum (14) can be driven in rotation about their common drum axis, **in that** the outer drum (14) and the inner drum (15) can be driven relative to one another to execute circular working movements about the centre axes of all the working chambers (3), **in that** a co-running covering belt (18), which encloses the outer drum (14) over a region of its circumference, forms the tops (5) of the working chambers (3) in this region, and **in that** each through-passage (13) of the outer drum (14) contains a working ring (9) projecting into the working chamber (3).

## Revendications

1. Dispositif de mise en forme de portions de pâte, comportant une chambre de mise en forme (3) contenant la portion de pâte à mettre en forme, qui est entourée par une paroi périphérique (4) de la chambre de mise en forme, un plafond (5) de la chambre de mise en forme et un fond (6) de la chambre de mise en forme, dans lequel la paroi (4) de la chambre de mise en forme et le fond (6) de la chambre de mise en forme peuvent être entraînés l'un par rapport à l'autre en un mouvement circulaire de mise en forme autour d'un axe central de la chambre de mise en forme (3) et le plafond (5) de la chambre de mise en forme est formé par un couvercle de chambre (8) librement mobile en hauteur, **caractérisé en ce qu'**une bague de travail (9) est saillante dans la chambre de mise en forme (3) sur la périphérie intérieure de la paroi (4) de la chambre de mise en forme et est disposée à distance du fond (6) de la chambre de mise en forme.

2. Dispositif de mise en forme selon la revendication 1, **caractérisé en ce que** le bord intérieur de la bague de travail (9) a une section transversale arrondie.

3. Dispositif de mise en forme selon la revendication 1, **caractérisé en ce que** la distance de la bague de travail (9) au fond (6) de la chambre de mise en forme est inférieure à sa distance du plafond (5) de la chambre de mise en forme.

4. Dispositif de mise en forme selon la revendication 1, **caractérisé en ce que** la distance de la bague de travail (9) au fond (6) de la chambre de mise en forme est réglable.

5. Dispositif de mise en forme selon la revendication 1, **caractérisé en ce que** la face supérieure de la bague de travail (9) descend en direction de son bord intérieur.

6. Dispositif de mise en forme selon la revendication 1, **caractérisé en ce que** la bague de travail (9) présente, vue en plan, un contour intérieur circulaire.

7. Dispositif de mise en forme selon la revendication 1, **caractérisé en ce que** la bague de travail (9) présente, vue en plan, un contour intérieur non circulaire.

8. Dispositif de mise en forme selon la revendication 7, **caractérisé en ce que** la bague de travail (9) présente, vue en plan, un contour intérieur au moins approximativement carré avec des angles intérieurs arrondis.

9. Dispositif de mise en forme selon la revendication 7, **caractérisé en ce que** la bague de travail (9) présente, vue en plan, un contour intérieur au moins approximativement hexagonal.

10. Dispositif de mise en forme selon la revendication 8 ou 9, **caractérisé en ce que** la paroi (4) de la chambre de mise en forme est, vue en plan, au moins approximativement carrée.

11. Dispositif de mise en forme selon la revendication 1, **caractérisé en ce que** la bague de travail (9) est formée par une bague appliquée sur la paroi (4) de la chambre de mise en forme.

12. Dispositif de mise en forme selon la revendication 1, **caractérisé en ce que** la bague de travail est formée sur la face intérieure d'une douille (11) de la chambre de mise en forme entourant la chambre de mise en forme (3), qui est disposée de façon interchangeable dans un cylindre (12).

13. Dispositif de mise en forme selon la revendication 1, **caractérisé en ce que** le couvercle de chambre (8) présente une cavité arrondie centrale dans sa face de couvercle inférieure tournée vers la chambre de mise en forme (3).

14. Dispositif de mise en forme selon la revendication 1, **caractérisé en ce que** le fond (6) de la chambre de mise en forme est formé par un disque de fond (1) essentiellement plan et **en ce que** la paroi (4) de la chambre de mise en forme avec la bague de travail (9) et le couvercle de chambre (8) peut être soulevée du disque de fond (1) pour la réception et la libération de la portion de pâte (10).

15. Dispositif de mise en forme selon la revendication 1, **caractérisé en ce que** plusieurs chambres de mise en forme (3) sont formées par des découpes (13) d'un tambour extérieur cylindrique creux (14), qui entoure un tambour intérieur (15), dont la surface extérieure (16) forme le fond (6) de la chambre de mise en forme (3), **en ce que** le tambour intérieur (15) et le tambour extérieur (14) peuvent être entraînés en rotation autour de leur axe de tambour commun, **en ce que** le tambour extérieur (14) et le tambour intérieur (15) peuvent être entraînés l'un par rapport à l'autre en des mouvements circulaires de mise en forme autour des axes centraux de toutes les chambres de mise en forme (3), **en ce qu'**une bande de recouvrement (18) entraînée en mouvement et entourant le tambour extérieur (14) dans une région de sa périphérie forme les plafonds (5) des chambres de mise en forme (3) dans cette région, et **en ce qu'**une bague de travail (9) saillante dans la chambre de mise en forme (3) est disposée dans chaque découpe (13) du tambour extérieur (14).
